# EUROPÄISCHE PATENTSCHRIFT

(11) **EP 0 785 883 B1**
(45) Veröffentlichungstag und Bekanntmachung des Hinweises auf die Patenterteilung: **19.12.2001**
(21) Anmeldenummer: 96924764.2
(22) Anmeldetag: 24.07.1996
(51) Int. Cl.: B60S 1/08

(54) **SENSOR ZUR SICHTWEITEN- UND REGENBELAGSERMITTLUNG**
SENSOR FOR DETERMINING VISUAL RANGE AND RAIN COVER
DETECTEUR DE DISTANCE DE VISIBILITE ET DE PRESENCE DE PLUIE

(30) Priorität: 17.08.1995 DE 19530289
(43) Veröffentlichungstag der Anmeldung: 30.07.1997
(73) Patentinhaber: ROBERT BOSCH GMBH, 70442 Stuttgart (DE)
(72) Erfinder: WINNER, Hermann, D-76229 Karlsruhe (DE)
(86) Internationale Anmeldenummer: DE9601353
(87) Internationale Veröffentlichungsnummer: WO9706997

(56) Entgegenhaltungen:
- EP-A- 0 312 788
- EP-A- 0 565 398
- US-A- 5 386 111
- PATENT ABSTRACTS OF JAPAN vol. 10, no. 14 (M-447) [2071] , 21.Januar 1986 & JP,A,60 174348 (NIPPON DENSO K.K), 7.September 1985,

## Beschreibung

### Stand der Technik

Aus der EP 0 312 788 A2 ist eine Vorrichtung zur Sichtweitenmessung für den Einbau in Kraftfahrzeuge bekannt, bei der ein Lichtemitter sowie ein Lichtsensor innenseitig einer Windschutzscheibe an einem Rückblickspiegel angeordnet sind. Der Lichtemitter erzeugt Lichtblitze, die etwa in Fahrtrichtung abgestrahlt werden. Ein von der Windschutzscheibe zurückgestreuter Anteil an Lichtstrahlen hängt von der Verschmutzung der Windschutzscheibe ab, während der von außerhalb zurückgestreute Lichtanteil den atmoshärischen Sichtverhältnissen entspricht. Die vom Lichtsensor aufgenommenen Lichtanteile werden über ein Laufzeitmeßverfahren voneinander unterschieden und entsprechend ausgewertet.

Für die Sichtweitenmessung sind drei Prinzipien zu unterscheiden: Kontrast-, Absorptions- und Reflektionsmessungen. Für das erste Prinzip benötigt man einen Gegenstand, den eine definierte Helligkeit auszeichnet, vor einem schwarzen Hintergrund. Kann dieser Gegenstand noch vom menschlichen Auge unterschieden werden, so ist er innerhalb der Sichtweite. Dieses Prinzip kann mit Hilfe der Foto- und Videotechnik automatisiert werden, doch nicht für den mobilen Einsatz, da kein geeignetes Objekt für die Kontrast gewährleistet werden kann. Das zweite Prinzip findet bei Autobahnmeßstellen Anwendung. Hier wird von einer Seite ein Lichtstrahl (mit i. allg. unsichtbarem Infrarotlicht) ausgesendet, der von einer ca. 2 m entfernten Gegenseite empfangen wird. Bei Nebel sinkt die empfangene Lichtleistung ab. Die Abschwächung ist dann ein maß für die Sichtweite. Für die autarke Detektierung im bewegten Fahrzeug ist auch dieses Prinzip praktisch nicht anwendbar. Hier kann das allerdings weniger aussagekräftige Reflektionsprinzip genutzt werden. Es basiert auf der Rückstreuung von ausgesendetem Licht durch die Nebeltröpfchen. Dieser Effekt führt auch zu der bekannten Eigenblendung durch Fernlicht bei Nebel. Zumindest für eine grobe Klassifizierung der Sichtweite reicht aber eine Messung der Reflektion aus. Für die Messung genügt grundsätzlich eine einfache Meßanordnung aus, die wie eine Reflektionslichtschranke arbeitet. Allerdings sind die Ergebnisse sehr leicht zu stören und von vielen Parametern abhängig.

Eine erhebliche Verbesserung der Robustheit erreicht man durch eine örtlich auflösende Rückstreumessung, bei der die abstandsabhängige Rückstreuverteilung zur Sichtweitenbestimmung herangezogen werden kann. Ein solches Meßverfahren ist die Messung der Rückstreuung in mehreren Entfernungszellen. Diese werden durch Korrelationstechniken unterscheidbar. Dieses Meßverfahren entspricht auch dem verbreiteter LIDAR-Sensoren (Light Detecting and Ranging), die als Abstandssensoren für Abstandswarnung und ACC vorgesehen sind. Die LIDAR-Sensoren zeigen eine gute Eignung für die Sichtweitenbestimmung. Aber gerade die nebelbedingte Rückstreuung führt zum größten Nachteil dieser Sensoren, nämlich zur starken Reduktion der Detektionsreichweite.

Ein alternatives Verfahren zur Entfernungsauflösung ist die Triangulationstechnik, bei der Sender und/oder Empfänger um eine sog. Basisbreite voneinander getrennt sind. Die stark gerichteten Sende- und Empfangskeulen überlappen sich in einem definierten Gebiet, so daß Rückstreuungen nur aus diesem Gebiet detektiert werden. Mit mehreren Sende- oder Empfangskeulen lassen sich so mehrere Rückstreugebiete erfassen.

Eine besondere Schwierigkeit bei der einfachen Sichtweitenbestimmung besteht darin, daß nur schwer unterschieden werden kann, ob eine gute Sichtweite herrscht oder ob wichtige Sensorteile ausgefallen sind. Eine indirekte Prüfung kann durch die Prüfung von Sender oder Empfänger durch Vergleich mit einem oder mehreren Referenzlichtkanälen geschehen, wodurch ein Großteil der möglichen Fehler detektiert werden.

Das z. Zt. aussichtsreichste Verfahren für die Regenbelagsermittlung basiert auf der Auskopplung eines Lichtstrahls aus einem Lichtkanal, der von den Windschutzscheibenrandflächen begrenzt wird. Diese Randflächen reflektieren das mit Hilfe eines Prismas eingebrachte Licht, da der Lichtstrahlwinkel zu klein ist, um eine Transmission zu erlauben. Benetzt nun ein Regentropfen den Lichtkanal, so gilt diese Reflektionsbedingung (Scheibe-Luft) nicht mehr, sondern es tritt nun ein großer Teil des Lichts über diesen Tropfen aus. Die nachlassende Lichtfähigkeit des Kanals wird an der Auskoppelstelle (wieder Prisma o.ä.) mit Hilfe von Fotodioden oder Fototransistoren gemessen. Zur Gleichlicht- und Rauschunterdrückung wird i. allg. die Sendeleistung moduliert und das Empfängersignal phasenempfindlich gemessen.

### Aufgabe

Um einer zu schnellen Fahrweise bei ungünstigen Sichtbedingungen sowie einer Nutzung von automatischen abstandsregelnden Geschwindigkeitsreglern (Adaptive Cruise Control/ACC) zu einem "Blindflug" zu begegnen, wird ein System vorgesehen, das den Fahrer bei nicht sichtweitenangepaßter Fahrgeschwindigkeit informiert. Eine solche Information zu liefern, die auch dem ACC-System zugeführt werden kann, ist die Aufgabe eines Sichtweitensensors.

### Vorteile der Erfindung

Der erfindungsgemäße Sensor mit den Merkmalen des Hauptanspruchs hat den Vorteil einer funktionellen Kombination und räumlichen Integration von Regenbelags- und Sichtweitensensor. Eine Trennung wird durch optische Separation oder Laufzeitunterschiede ermöglicht. Eine Fehlerüberprüfung des Regenbelagssensors ermöglicht eine Fehlerdetektion bei der Sichtweitenbestimmung. Die Sichtweitenbestimmung ist über einen Wert oder mehrere entfernungsverschiedene Rückstreuwerte möglich. Eine kostengünstige Verwendung von Komponenten für verschiedene Aufgaben (Regenbelags- und Sichtweitensensierung) ist besonders vorteilhaft. Zwei Funktionen an einem Platz werden durch Integration erhalten. Eine Fehlererkennung ist bei Sichtweitenmessung durch den Referenzkanal, der den Regenbelag sensiert, möglich.

### Zeichnung

Ein Ausführungsbeispiel der Erfindung ist in der Zeichnung dargestellt und wird in der Beschreibung erläutert. Es zeigt
**Figur 1** das Grundprinzip,
**Figur 2** ein Beispiel mit Fresnellinse,
**Figur 3** eine optische Trennung der Empfangskanäle und

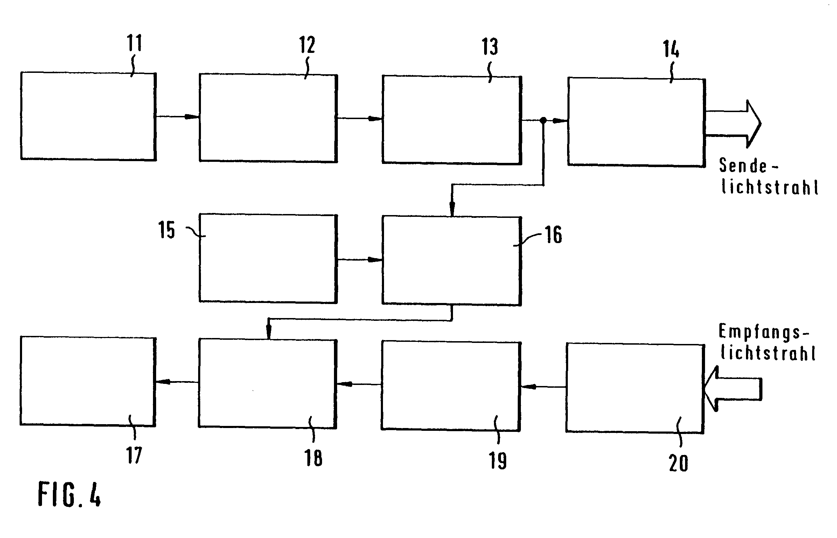

**Figur 4** ein Blockschaltbild für Modulation und Demodulation.

### Beschreibung der Erfindung

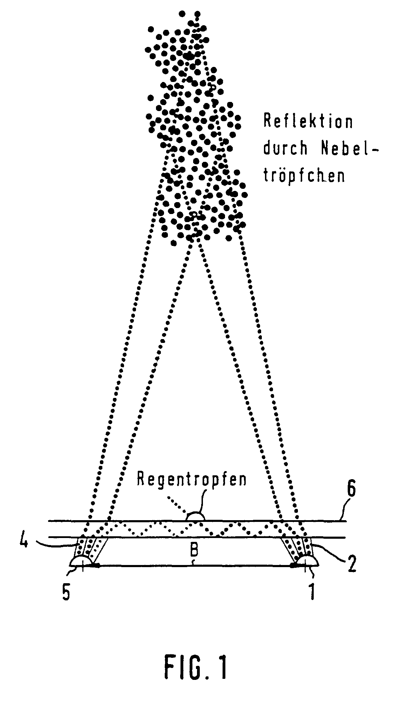

In dieser Erfindung sind als Neuheit die Funktionen Sichtweitenermittlung und Regenbelagsmessung in einer Einheit verknüpft. Eine mögliche Ausführungsform ist in Abb. 1 ausgeführt: Das Licht der Lichtquelle 1, z. B. einer LED oder eines HL-Lasers, wird über das Einkoppelmedium, z. B. eine Art Prisma in die Windschutzscheibe 6 unter mehreren Winkeln eingekoppelt. Der am stärksten geneigte Lichtstrahlteil verbleibt in der Scheibe und wird zur Messung des Regenbelags genutzt. Die Ausbreitung dieses Strahls geschieht zickzackförmig zumindest solange kein Regenbelag zur Auskopplung führt. Die mehrfach an den Scheibenbegrenzungen reflektierten Strahlen werden mittels eines Auskoppelmediums 4 dem Lichtempfänger 5, z. B. einer Photodiode zugeführt, der die Lichtleistung in ein elektrisches Signal umsetzt. Der Abstand zwischen dem Einkoppelmedium 2 und dem Auskoppelmedium 4 ist die Basisbreite B.

Die zuletzt beschriebene Teilfunktion entspricht der konventionellen Regenbelagsmessung. Für die Sichtweitensensierung werden die Strahlteile genutzt, die auch bei regenbelagsfreier Scheibe auskoppeln. Diese Strahlen werden bei Nebel oder Gischt diffus reflektiert (gestreut). Ein Teil des gestreuten Lichts kommt auch zum Lichtempfänger durch. Ohne weitere Maßnahmen ist dieser Anteil nicht trennbar von dem Licht, das innerhalb der Scheibe geführt wurde. Dazu stehen zwei grundsätzliche Wege offen, die Trennung zu erreichen:
1. optische Trennung der beiden Strahlen,
2. Modulation der Lichtquelle und Trennung der Lichtstrahlen über die unterschiedliche Laufzeit

### 1. Optische Trennung zwischen Scheibeninnenstrahl und rückgestreutem Licht

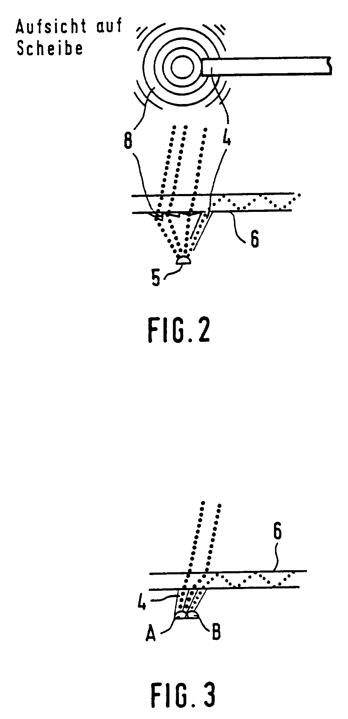

Wie in Abb. 3 dargestellt, kann statt des einfachen Lichtempfängers ein Doppelempfänger für die Trennung sorgen. Der Lichtempfänger A mißt vor allem den rückgestreuten, der Empfänger B den Scheibeninnenstrahl. Grundlage dafür ist eine klare Trennung vor und bei der Auskopplung, so daß keine undefinierten Überkopplungen zwischen beiden Strahlen erfolgen können.
Dieses Prinzip kann weiter ausgebaut werden, indem die rückgestreuten Lichtstrahlen durch weitere Lichtempfänger nach ihrem Rückstrahlwinkel getrennt werden. Über den unterschiedlichen Winkel läßt sich per Triangulation (mit Hilfe der Basisbreite B und der Kenntnis über Sendestrahlwinkel) eine Aussage über die Entfernung der Rückstreuung gewinnen, wodurch zuverlässigere Aussagen über die Sichtweite zu bekommen sind.

### 2. Modulation der Lichtquelle

Eine sehr einfache Art der Modulation ist die Pulsmodulation mit einem kurzen Puls. Dazu wird ein Pulsgenerator (13) periodisch von einem Zähler (12) angesteuert, der wiederum selbst mit dem Takt des Taktgenerators (11) gespeist wird. Der Pulsgenerator erzeugt einen elektrischen Puls, der von der Sendediode (14) in einem Lichtpuls gewandelt wird. Die Pulslänge Δt sollte kleiner oder in der Größenordnung der Laufzeit τ für die rückgestreuten Strahlen sein. Bei einer Rückstreuung in einer Entfernung d = 10m beträgt die Laufzeit τ für Hin- und Rückweg ca. 66 ns (τ = 2d/c) (zum Vergleich: die Laufzeit beträgt innerhalb der Scheibe nur etwa ein Hundertstel davon). Die Empfängerdiode (20) wandelt das empfangene Licht in ein elektrisches Signal um, das vom Verstärker (19) verstärkt und zur Abtastschaltung (18) weitergeleitet wird. Der Abtastzeitpunkt selbst wird durch den Sendepuls bestimmt. Dazu wird das Signal des Pulsgenerators einer Verzögerungsschaltung (16) zugeführt, in der dieser um eine, durch die Verzögerungssteuerung (15) bestimmte Zeit verzögert wird. Das abgetastete Signal wird im Summierer (17) zu den Signalen vorheriger Pulse summiert.

Das Ergebnis entspricht mathematisch einer Signalkorrelation K(T) zu einer definierten Verzögerungszeit (T) von Sendepuls mit empfangenem Signal.
Die mit einer kleinen Verzögerungszeit (T1) korrelierte Lichtleistung K(T1) entspricht dem in der Scheibe geführten Lichtstrahl, während das mit einer etwas größeren Verzögerungszeit (T2) korrelierte K(T2) dem rückgestreuten Strahlteils zugeordnet werden kann. Konkret sind die Korrelationsverzögerungszeiten abhängig von der Pulsdauer Δt und τ: T1 ≈ Δt/2, T2 ≈ Δt+τ/2. Messungen mit weiteren Korrelationsverzögerungszeiten können auch hier zu einer entfernungsauflösenden Rückstreumessung genutzt werden. Weitere mögliche Modulationsarten sind Dauerstrich-Amplitudenmodulation der Lichtquelle mit hochfrequenter Modulationsfrequenz in der Größenordnung von 1 MHz sowie Pseudo-Random-Binary-Modulation, die als Abwandlung der oben beschriebenen Einfachpulsmodulation verstanden werden kann.

### Auswertung der Signale

Nach der Trennung der Signale T(tᵢ), der empfangenen Leistung vom in der Scheibe geführten Strahl, und R(dⱼ, tᵢ), der empfangenen Leistung des in der Entfernung dⱼ rückgestreuten Strahls (alle zum Zeitpunkt tᵢ gemessen), werden folgende Aussagen gewonnen oder Aktionen unternommen. Sinkt T(tᵢ) unter eine Schwellwert, wird der Scheibenwischer angesteuert. Dabei wird erwartet, daß T zumindest kurzzeitig über die Schwelle ansteigt, wenn nämlich der Wischer gerade den Sensierungsbereich überfährt. Bleibt dies auch nach mehrmaligem Wischen aus, muß auf einen Defekt innerhalb der Kette (elektrische Ansteuerung der Lichtquelle, die Lichtquelle selbst, Einkopplung, Auskopplung, Lichtempfänger, elektrische Signalaufbereitung) geschlossen werden und führt daher zum Setzen eines Fehlerflags. Das Überschreiten des Schwellwerts führt hingegen immer zum Rücksetzen dieses Flags.
Die Auswertung der Rückstreuung unterscheidet sich, falls nur ein einziger Wert oder mehrere Werte zu verschiedenen Rückstreuentfernungen vorhanden sind:

### a) nur ein Wert

Der Rückstreuwert wird mit gespeicherten Werten verglichen und eine Klassifizierung durchgeführt. Die Klassenbildung basiert auf Vergleichsmessungen in realem Nebel, bei denen eine Referenzmessung (z. B. Absorptions- oder Kontrastmessung) die Sichtweite festlegt. Einflüsse durch sich ändernde Lichtquellenintensitäten und Empfängerempfindlichkeiten können durch den Vergleich mit den Messungen des in der Scheibe geführten Strahls zumindest teilweise kompensiert werden. Nach der Klassifizierung wird insbesondere bei der Einstufung für die Klasse der größten Sichtweite geprüft, ob das oben eingeführte Fehlerflag gesetzt ist. Falls dieses nicht gesetzt ist, kann von voller Funktionstüchtigkeit ausgegangen werden und das Ausbleiben eines Rückstreusignals wirklich auf eine große Sichtweite zurückgeführt werden. Ohne die Überprüfung durch den in der Scheibe geführten Strahls wäre ein Defekt z. B. in der Lichtquelle nicht unterscheidbar von der korrekten Messung bei großer Sichtweite.

### b) mehrere Werte bei verschiedenen Entfernungen

Die Rückstreuung an Wassertröpfchen hat eine charakteristische Entfernungsabhängigkeit. Dies wird beschreiben in "Jürgen Streicher, Forschungsbericht DLR-FB 90-50, Simulation eines Rückstreustrom-Lidar, 1990". Liegt die Information der Rückstreuung bei verschiedenen Entfernungen vor, so kann nicht nur die Stärke, sondern auch das Verhältnis der verschiedenen Rückstreuwerte ausgewertet werden. Fehler, die sich auf die Rückstreuleistung auswirken (z. B. nachlassende Lichtquellenleistung oder Empfängerempfindlichkeit, aber auch nachlassende Scheibentransmissivität) lassen sich genauso eliminieren wie Rückstreuungen durch andere Reflektoren (z. B. andere Fahrzeuge im Nahbereich). Wie bei der Auswertung mit nur einem Wert kann auch hier ein Vergleich mit Referenzwerten zu einer Klassifizierung der Sichtweite führen, zu dem für die Fehlererkennung das obige Fehlerflag hinzugezogen wird.

### Mögliche Erweiterungen

Die in Abb. 1 und 3 gezeigten Anordnungen haben den Nachteil einer sehr geringen Empfangsfläche, die durch den Empfänger gegeben ist. Zur Erhöhung der Empfindlichkeit ist eine Fokussierung wünschenswert, so daß eine größere Empfangsfläche zur Verfügung stehen kann. Eine Umsetzungsmöglichkeit zeigt Abb. 2, die ausgehend von der Anordnung in Abb. 1 zusätzlich eine Sammellinse 8 (in diesem Fall eine besonders flach zu bauende Fresnellinse) aufweist. Der Lichtempfänger befindet sich nun in etwas größerer Entfernung von der Scheibe im Brennpunkt dieser Linse. Eine wichtige Anforderung an die Linse ist die Entkopplung zum in der Scheibe eingeführten Strahl, damit von diesem kein Licht ausgekoppelt wird. Daher sollte im Regenbelags-Sensierungsbereich keine Linse direkt an der Scheibenbegrenzung angeordnet sein.

## Patentansprüche

1. Sensor zur Sichtweiten- und Regenbelagsermittlung, insbesonders in einem Kraftfahrzeug, mit einer Lichtquelle (1), deren Licht in eine Scheibe so eingekoppelt wird, daß ein Teil innerhalb der Scheibe (6) reflektiert wird und zur Messung des Regenbelags ausgewertet wird, mit einem Lichtempfänger (5), dem über ein Auskoppelmedium (4) Licht aus der Scheibe zugeführt wird, wobei der Teil des Lichtes, der auch bei regenbelagsfreier Scheibe aus dieser ausgekoppelt wird, zur Ermittlung der Sichtweite ausgewertet wird, wobei das gestreute Licht, das zur Scheibe zurückgelangt, über das Auskoppelmedium (4) zum Lichtempfänger geführt wird (5).

2. Sensor nach Anspruch 1, **dadurch gekennzeichnet, daß** das Licht unter einem vorgebbaren Winkel in die Scheibe eingekoppelt wird.

3. Sensor nach Anspruch 1 oder 2, **dadurch gekennzeichnet, daß** das von Auskoppelmedium (4) kommende Licht getrennt wird in gestreutes Licht und reflektiertes Licht.

4. Sensor nach einem der vorhergehenden Ansprüche, **dadurch gekennzeichnet, daß** zur Erhöhung der Empfindlichkeit das gestreute und reflektierte Licht fokussiert wird.

5. Sensor nach einem der vorhergehenden Ansprüche, **dadurch gekennzeichnet, daß** die Lichtquelle (1), die den Sendelichtstrahl liefert, moduliert wird.

6. Sensor nach einem der vorhergehenden Ansprüche, **dadurch gekennzeichnet, daß** die Modulation der Lichtquelle (1) eine Pulsmodulation mit einem kurzen Puls ist.

7. Sensor nach Anspruch 1 bis 4, **dadurch gekennzeichnet, daß** als Modulation eine Dauerstrich-Amplitudenmodulation oder Pseudo-Random-Binary-Modulation gewählt wird.

## Claims

1. Sensor for determining visual range and rain cover, in particular in a motor vehicle, having a light source (1) whose light is coupled into a pane in such a way that a portion is reflected inside the pane (6) and is evaluated for the purpose of measuring the rain cover, and having an opto-receiver (5) which is fed light from the pane via an outcoupling medium (4), the portion of the light which is also coupled out from the pane in the case of a pane free from rain cover being evaluated for the purpose of determining the visual range, scattered light which returns to the pane being led to the opto-receiver (5) via the outcoupling medium (4).

2. Sensor according to Claim 1, **characterized in that** the light is coupled into the pane at a prescribable angle.

3. Sensor according to Claim 1 or 2, **characterized in that** the light coming from the outcoupling medium (4) is separated into scattered light and reflected light.

4. Sensor according to one of the preceding claims, **characterized in that** the scattered light and reflected light are focused in order to increase the sensitivity.

5. Sensor according to one of the preceding claims, **characterized in that** the light source (1) supplying the transmitted light beam is modulated.

6. Sensor according to one of the preceding claims, **characterized in that** the modulation of the light source (1) is a pulse modulation with a short pulse.

7. Sensor according to Claims 1 to 4, **characterized in that** continuous wave amplitude modulation or pseudo-random binary modulation is selected as modulation.

## Revendications

1. Détecteur de distance de visibilité et de présence de pluie, en particulier dans une véhicule automobile, comportant une source lumineuse (1), dont la lumière est incorporée dans une vitre de façon telle qu'une partie est réfléchie à l'intérieur de la vitre (6) et est exploitée pour mesurer la présence de pluie, avec un récepteur de lumière (5) vers lequel un élément de réfraction (4) dirige la lumière venant de la vitre, détecteur avec lequel la partie de la lumière réfractée hors de la vitre, même en l'absence de pluie sur la vitre est exploitée pour calculer la distance de visibilité, la lumière dispersée qui retourne vers la vitre étant dirigée, par l'intermédiaire de l'élément de réfraction (4) vers le récepteur de lumière (5)

2. Détecteur selon la revendication 1,
**caractérisé en ce que**
pour tout angle inférieur à un angle donné, la lumière est absorbée dans la vitre.

3. Détecteur selon la revendication 1 ou 2,
**caractérisé en ce que**
la lumière venant de l'élément de réfraction (4) est divisée en lumière dispersée et lumière réfléchie.

4. Détecteur selon l'une quelconque des revendication 1 à 3,
**caractérisé en ce que**
dans le but d'accroître la sensibilité, la lumière dispersée et la lumière réfléchie sont focalisées.

5. Détecteur selon l'une quelconque des revendications précédentes,
**caractérisé en ce que**
la source lumineuse (1) émettant le rayon incident est modulée.

6. Détecteur selon l'une quelconque des revendication précédentes 1,
**caractérisé en ce que**
la modulation de la source lumineuse (1) est une modulation d'impulsions de courte amplitude.

7. Détecteur selon l'une quelconque des revendication 1 à 4,
**caractérisé en ce que**
comme modulation, on choisit une modulation d'amplitude à ondes continues ou une modulation binaire pseudo aléatoire.
